# EUROPÄISCHE PATENTANMELDUNG

(11) **EP 1 139 081 A1**
(43) Veröffentlichungstag der Anmeldung: **04.10.2001**
(21) Anmeldenummer: 01104665.3
(22) Anmeldetag: 24.02.2001
(51) Int. Cl.: G01K 1/08

(54) **Sensor mit einem temperaturabhängigen Messelement**

(30) Priorität: 29.03.2000 DE 10015481
(71) Anmelder: Heraeus Electro-Nite International N.V., 3530 Houthalen (BE)
(72) Erfinder: Muziol, Matthias, 63500 Seligenstadt (DE)
(74) Vertreter: Kühn, Hans-Christian

(57) **Zusammenfassung**

Ein Sensor für Temperatur-Messungen weist ein temperaturabhängige Messelement auf, das in einem der Messung zugewandten Ende eines Quarzglasrohres angeordnet ist, wobei durch das andere Ende des Quarzglasrohres eine Anschlussleitung des Messelements nach außen geführt ist; das Quarzglasrohr ist seinerseits von einem Schutz-Rohr aus Edelstahl umgeben ist, welches an seinem der Messung zugewandten Ende mit einem rotationssymmetrischen Formkörper, vorzugsweise einer Kugel aus Edelstahl verschlossen ist; zwischen dem Formkörper bzw. der Kugel und dem Messelement ist ein Abstandshalter aus elektrisch isolierendem Werkstoff - vorzugsweise Glimmer - vorgesehen ist.

## Beschreibung

Die Erfindung betrifft einen Sensor mit einem temperaturabhängigen Messelement zur Temperaturmessung, das im Inneren eines der Messung zugewandten Endes eines Quarzglasrohres angeordnet ist, wobei durch das andere Ende des Quarzglasrohres eine Anschlussleitung des Messelements nach außen geführt ist.

Aus der GB 22 23 100 A ist ein Hochtemperatur-Platin-Widerstandsthermometer bekannt, bei dem eine Platinwicklung als Messelement im verschlossenen Ende eines Quarzrohres angeordnet ist. Als problematisch erweist sich die Möglichkeit einer eventuellen Kontamination des Platinsensors durch Migration von Metalldampf durch die Quarzwand des Hüllrohres. Weiterhin ist eine Quarzumhüllung von Sensoren als anfällig gegen mechanische Beschädigungen im robusten Einsatz in Öfen - z.B. in Haushaltsbacköfen - anzusehen.

Weiterhin ist aus der DE 3300733 A1 ein Temperaturfühler bekannt, der als äußere Umhüllung eine Hülse aus Edelstahl mit geringer Wandstärke aufweist, die auf der zur Messung gerichteten Seite mit einer Kappe abgeschlossen ist. Im Inneren der Umhüllung ist ein aus Kunststoffschaum bestehender Montagekörper vorgesehen, der nicht nur zur Halterung einer Mess-Sonde dient, sondern auch für eine Konvektionsunterbrechung zwischen der Mess-Sonde und dem der Kappe abgewandten Ende des Temperaturfühlers sorgt.

Als problematisch erweist sich die verhältnismäßig geringe Wärmebeständigkeit des Kunststoffschaumes in einem Bereich bis zu 140°C, so dass ein Einsatz in Öfen bzw. Haushalts-Backöfen nicht möglich ist.

Weiterhin ist aus der DE-OS 1 473 279 eine Schutzrohranordnung zur raschen Tauchmessung eines schmelzflüssigen Metalls, insbesondere zur Messung der Gießtemperatur von schmelzflüssigem Eisen, Stahl oder dergleichen, bekannt, bei dem ein Schutzrohrelement aus einem hitzebeständigen Material, insbesondere Quarz, mit geringer Wandstärke und kleinem Außendurchmesser sowie ferner mit einem abgeschlossenen Ende vorgesehen ist, welches im Inneren des geschlossenen Endes ein Messelement zur Temperatur-Messung der Schmelze aufweist; weiterhin ist ein Verkleidungsrohrelement aus einem wärmeisolierenden, unbrennbaren Material - vorzugsweise Quarz - vorgesehen, welches den größten Teil der Länge des Schutzrohrelements mit Ausnahme seines geschlossenen Endes umfasst; weiterhin ist ein Trägerrohrelement an sich bekannter Art als Halter vorgesehen, welches auf das Verkleidungsrohrelement aufgeschoben ist und zwar an dem Endteil, welcher dem geschlossenen Ende des Schutzrohres abgekehrt ist.

Ein zwischen dem Schutzrohrelement und Verkleidungsrohrelement befindlicher ringförmiger Zwischenraum wird vorzugsweise mit einem Pulver aus wärmeisolierendem, hitzebeständigem Material gefüllt. Als problematisch erweist sich bei einer solchen Schutzrohranordnung der verhältnismäßig komplexe Aufbau.

Aus der DE 35 28 161 C1 ist ein Thermoelement zur raschen Temperaturerfassung und Abwehr von Störsignalen bei der Temperaturmessung in Vakuumöfen bekannt, wobei das Schutz-rohr aus Quarzglas besteht und mit einem geerdeten Metalldraht umwendelt ist; die Umwendelung mit dem geerdeten Metalldraht schirmt das Thermoelement vor elektrischen Störeinflüssen im Ofenraum ab, ohne dass die Strahlungsdurchlässigkeit des Schutzrohres behindert wird. Als Drahtmaterialien haben sich je nach Temperatureinsatz Chrom-Nickel, Molybdän und Platin bewährt.

Auch hier handelt es sich um eine verhältnismäßig komplexe Anordnung.

Aufgabe der Erfindung ist es, zur Temperaturmessung, insbesondere in Backöfen für Back- und Garbetrieb, einen kostengünstigen Sensor zu schaffen, dessen Isolation weitgehend spannungsfest ist. Der zur Messung vorgesehene Temperaturbereich soll dabei zwischen -40 bis 550°C liegen.

Die Aufgabe wird erfindungsgemäß dadurch gelöst, dass das Quarzglasrohr von einem Schutz-Rohr aus Metall umgeben ist, welches an seinem der Messung zugewandten Ende mit einem rotationssymmetrischen Formkörper verschlossen ist, wobei zwischen dem Formkörper und dem Messelement ein Abstandshalter aus elektrisch isolierendem Werkstoff vorgesehen ist.

Vorteilhafte Ausgestaltungen der Erfindung sind in den Ansprüchen 2 bis 8 angegeben.

In einer bevorzugten Ausführungsform der Erfindung ist der rotationssymmetrische Formkörper in das offene Ende des Schutz-Rohres eingepresst und wird dabei formschlüssig gehalten.

In einer besonders vorteilhaften Ausgestaltung der Erfindung ist der rotationssymmetrische Formkörper als Kugel ausgebildet.

Es ist jedoch auch möglich, als rotationssymmetrischen Formkörper beispielsweise einen Ellipsoiden oder einen kegelförmigen Körper einzusetzen.

Vorteilhafterweise bestehen sowohl das Schutz-Rohr als auch die Kugel aus Edelstahl. Als Edelstahl-Kugel wird vorzugsweise eine Kugel gemäß DIN 5401, Wkst. 1.4034/1.3541 eingesetzt.

Als Messelement ist vorzugsweise ein Platin-Dünnschicht-Widerstand eingesetzt, dessen Anschlussleiter angeschweißt sind und innerhalb des Quarzglasrohres gegeneinander durch einen langgestreckten Zwischensteg voneinander elektrisch isoliert sind. Vorteilhafterweise dient der Zwischensteg auch zur formschlüssigen Halterung des Messelements.

Sowohl der Abstandshalter zwischen dem Formkörper bzw. der Kugel und dem Messelement als auch der Zwischensteg bestehen vorzugsweise aus Glimmer.

Als vorteilhaft erweist sich, dass Fertigung und Kennzeichnung eines kompletten Schutzrohres sowie Versicken des Anschlusskabels im Schutzrohr in einem einzigen Arbeitsgang möglich sind; weiterhin erweist es sich als vorteilhaft, dass das Anschlusskabel vom Anschlussstecker bis zum Messelement ohne zusätzliche Verbindungsstellen durchgängig ist.

Weiterhin ist ein Quarzglasrohr verhältnismäßig preiswert herzustellen; darüber hinaus stellt die Verwendung von Quarzglas die elektrische Isolation des Temperatur-Sensors gegenüber der Ofenstromversorgung insbesondere bei höheren Temperaturen sicher. Die Spannungsfestigkeit bzw. die Isolation zwischen den elektrischen Leitern und dem Schutzrohr ist so hoch, dass beispielsweise bei Anlegen einer Spannung von 3000V kein Spannungsüberschlag stattfindet.

Beim Einsatz von Glimmerstreifen erweist es sich als vorteilhaft, dass diese nicht sehr bruchempfindlich sind und die Montage radial erfolgen kann, so dass keine Isolierteile aufgefädelt werden, die dann beim Erstellen der Verbindungsstelle Messelement/Anschlussleitung im Wege stehen würden. Der Glimmerstreifen hat den weiteren Vorteil, dass er durch eine Einsparung in der Länge des Messelements und durch Überstand nach vorne über das Messelement hinaus einen Isolationsabstand zum Formkörper bzw. zur Metallkugel sicherstellt.

Ein weiterer Vorteil ist darin zu sehen, dass sich ein als Edelstahlkugel ausgebildeter Formkörper besonders leicht verarbeiten lässt, da die Kugel vor der Montage in ihrer Position innerhalb der Öffnung des Schutzrohres nicht exakt ausgerichtet werden muss.

Im folgenden ist der Gegenstand der Erfindung anhand der Figuren 1a, 1b, 1c, 2 und 3 näher erläutert.
Figur 1a zeigt in einer schematischen Darstellung den teilweise gebrochen dargestellten Temperatur-Sensor im Längsschnitt;
Figur 1b zeigt schematisch einen Querschnitt entlang der durch die Linie AA symbolisch angedeuteten Querschnittsebene, wobei die Schnittebene um 90° gegenüber der Längsachse gedreht dargestellt ist;
Figur 1c zeigt eine Halterungsanordnung für den Temperatur-Sensor in einer schematischen Frontaldarstellung.
Figur 2 zeigt schematisch den teilweise gebrochen dargestellten Temperatur-Sensor mit angeschlossenem Kabel in einer seitlichen Ansicht.
Figur 3 stellt schematisch einen Längsschnitt durch das Sensorelement sowie Abstandshalter, Zwischensteg und Quarzglasrohr dar.

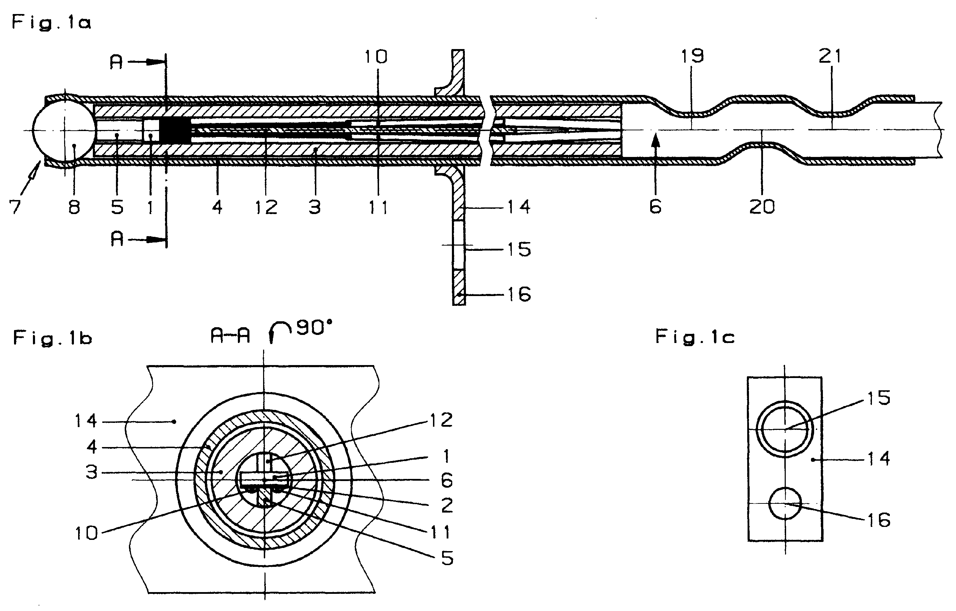

Gemäß Figur 1a ist ein als Messelement 1 dienender Messwiderstand von einem Quarzglasrohr 3 umgeben, welches seinerseits in einem Schutzrohr 4 aus Edelstahl angeordnet ist. Das Messelement 1 ist mit Hilfe eines elektrisch isolierenden Abstandshalters 5 und eines Zwischensteges 12 im Quarzglasrohr 3 formschlüssig angeordnet, wobei der Abstandshalter 5 als Glimmerstreifen entlang entlang der Längsachse 6 des Schutzrohres 4 ausgebildet ist.

Im Bereich des der Messung zugewandten Endes 7 des Schutzrohres 4 ist eine als rotationssymmetrischer Formkörper 8 ausgebildete Edelstahl-Kugel in die Schutzrohr-Öffnung eingepresst, wobei die Kugel an die Öffnung des Quarzglasrohres 3 angrenzt und die Öffnung von Schutzrohr 4 gasdicht abschließt; aufgrund des Einpressvorganges wird sie dabei formschlüssig im Bereich des Endes 7 von Schutzrohr 4 gehalten.

Das Messelement 1 ist auf seiner der Messung abgewandten Seite mit Anschlussleitungen 10, 11 versehen, die jeweils durch einen Zwischensteg 12 aus elektrisch isolierendem Material voneinander isoliert sind; in einer bevorzugten Ausführungsform ist der Zwischensteg 12 - ebenso wie Abstandshalter 5 - als Glimmerstreifen ausgebildet. Weiterhin ist es auch möglich, den Zwischensteg 12 zusammen mit dem Abstandshalter 5 aus einem zusammenhängenden Glimmerstreifen zu bilden.

Beim Aufbau des Temperatur-Sensors erweist es sich als besonders vorteilhaft, dass die aus Edelstahl bestehende Kugel als Formkörper 8 vor ihrer Montage im Öffnungs-Bereich von Ende 7 des Schutzrohres 4 -d.h. vor dem Einpressvorgang - nicht genau positioniert werden muss, da sie sich aufgrund ihrer Kugelform praktisch selbstständig in der hohlzylindrisch ausgebildeten Öffnung zentriert. Hierbei erweist es sich als besonders vorteilhaft, dass auf einen späteren Schweißvorgang mit anschließendem Versäubern der Schweißnaht verzichtet werden kann, wobei dann auch keine scharfen Kanten mehr auftreten können. Der ursprüngliche Rohrdurchmesser wird im Bereich des Rohrendes durch die Edelstahl-Kugel als Formkörper 8 nur geringfügig vergrößert, wobei hier eine Standardkugel nach DIN 5401; Wkst. 1.4034/1.3541 zum Einsatz gelangt.

Gemäß Figur 1a ist das Schutzrohr 4 in einer flächenhaft ausgebildeten Halterung 14 angeordnet, welche eine Befestigung mit einem dem räumlichen Messbereich zugewandten Ende 7 des Schutzrohres 4 ermöglicht. Somit kann beispielsweise Halterung 14 an einer Rückwand eines Backofens befestigt werden, wobei durch eine Öffnung dieser Wand der Temperatur-Sensor mit einem Teil von Schutzrohr 4 und dem der Messung bzw. dem zu erwärmenden Gut zugewandten Ende 7 in den Innenraum des Ofens ragt.

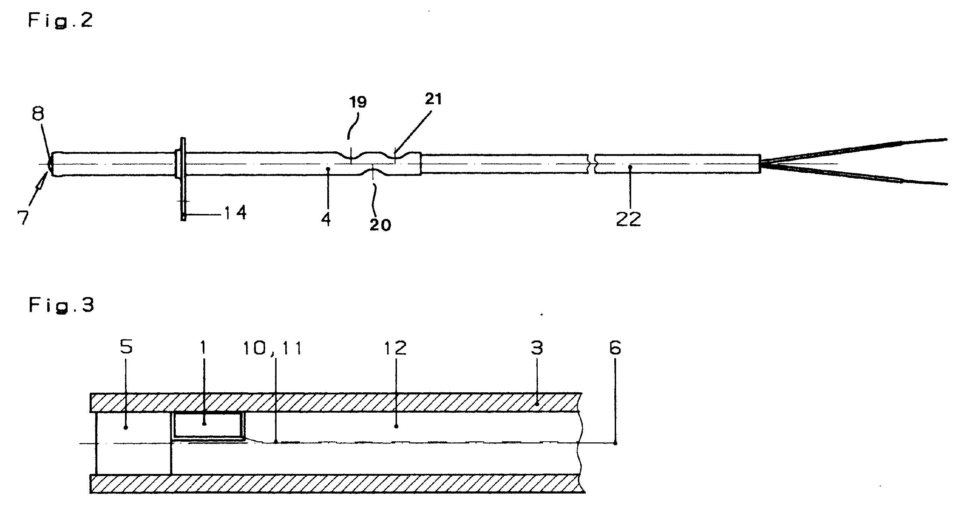

In Figur 1a sind auch Quetschbereiche 19, 20 und 21 zur Befestigung eines Anschlusskabels erkennbar, wie es anhand Figur 2 nachstehend erläutert wird.

Als besonders vorteilhaft erweist es sich, dass sich der erfindungsgemäße Temperatur-Sensor auch für spannungsfeste Anwendungen eignet, bei denen die üblichen Spannungswerte - beispielsweise 220V/380V der Haushaltsstromversorgung - erheblich überschritten werden können.

Gemäß dem Querschnitt in Figur 1b (um 90° gedreht) ist der Messwiderstand als Messelement 1 auf Abstandshalter 5 als Glimmerstreifen angeordnet, wobei Messelement 1 und Glimmerstreifen zusammen von Quarzglasrohr 3 umgeben sind; im Hintergrund ist ein Teil des Zwischensteges 12 erkennbar, welcher im Zusammenwirken mit dem Abstandshalter 5 und der Innenwand des Quarzglasrohrs 3 für eine formschlüssige Halterung von Messelement 1 sorgt. Das Quarzglasrohr 3 ist wiederum von Schutzrohr 4 aus Edelstahl eingeschlossen, wobei im Hintergrund der Querschnittsfläche längs der Linie AA nach Figur 1a auch ein bruchstückhaft dargestellter Teil von Halterung 14 erkennbar ist.

In Figur 1c ist die komplette Halterung 14 dargestellt, wobei Öffnung 15 zur Durchführung und Halterung von Schutzrohr 4 dient, während Öffnung 16 zur Befestigung im Wandbereich (z. B. Rückwand) eines Ofens bzw. eines zu temperierenden Behandlungsraumes dient.

Anhand Figur 2 ist im Bereich des Endes 7 von Schutzrohr 4 der gasdichte Abschluss mittels der als Formkörper 8 ausgebildeten Edelstahl-Kugel 8 erkennbar, wobei in dem der Messung abgewandten Bereich das Schutzrohr 4 Quetschbereiche 19, 20, 21 aufweist, mit denen ein Anschlusskabel 22 zur Übertragung von Mess-Signalen aus Messelement 1 für die in Figur 1a dargestellten Anschlussleitungen 10, 11 arretiert wird; das Anschlusskabel 22 ist mit einer hier nicht dargestellten Mess- bzw. Regelvorrichtung verbunden. Weiterhin ist in Figur 2 die in Figur 1c beschriebene Halterung 14 erkennbar.

In Figur 3 ist die formschlüssige Halterung von Messelement 1 schematisch dargestellt. In dieser speziellen Form ruht Messelement 1 in einem Ausschnitt des Zwischensteges 12, welcher die mit dem Messelement 1 verbundenen Anschlussleitungen gegeneinander elektrisch isoliert (Anschlussleitungen sind hier zwecks besserer Übersicht nicht dargestellt). Das Messelement 1 ist dabei in axialer Richtung gesehen durch Zwischensteg 12 und Abstandshalter 5 und in radialer Richtung gesehen durch die Aussparung von Zwischensteg 12 und die Innenwand des Quarzglasrohres 3 unverrückbar gehalten.

## Patentansprüche

1. Sensor mit einem temperaturabhängigen Messelement zur Temperaturmessung, das im Inneren eines der Messung zugewandten Endes eines Quarzglasrohres angeordnet ist, wobei durch das andere Ende des Quarzglasrohres eine Anschlussleitung des Messelements nach außen geführt ist, **dadurch gekennzeichnet, dass** das Quarzglasrohr (3) von einem Schutz-Rohr (4) aus Metall umgeben ist, welches an seinem der Messung zugewandten Ende (7) mit einem rotationssymmetrischen Formkörper (8) verschlossen ist, wobei zwischen dem rotationssymmetrischen Formkörper (8) und dem Messelement (1) ein Abstandshalter (5) aus elektrisch isolierendem Werkstoff vorgesehen ist.

2. Sensor nach Anspruch 1, **dadurch gekennzeichnet, dass** der rotationssymmetrische Formkörper (8) in das Ende (7) des Schutz-Rohres (4) eingepresst ist und formschlüssig gehalten wird.

3. Sensor nach Anspruch 1 oder 2, **dadurch gekennzeichnet, dass** der rotationssymmetrische Formkörper (8) als Kugel ausgebildet ist.

4. Sensor nach einem der Ansprüche 1 bis 3, **dadurch gekennzeichnet, dass** der Abstandshalter (5) aus Glimmer besteht.

5. Sensor nach einem der Ansprüche 1 bis 4, **dadurch gekennzeichnet, dass** das Schutz-Rohr (4) aus Edelstahl besteht.

6. Sensor nach einem der Ansprüche 1 bis 5, **dadurch gekennzeichnet, dass** der rotations-symmetrische Formkörper (8) aus Edelstahl besteht.

7. Sensor nach einem der Ansprüche 1 bis 6, **dadurch gekennzeichnet, dass** als Messelement (1) ein Platin-Dünnschicht-Widerstand eingesetzt ist, dessen Anschlussleiter (10, 11) innerhalb des Quarzglasrohres gegeneinander durch einen langgestreckten Zwischensteg (12) voneinander isoliert sind.

8. Sensor nach einem der Anspruch 7, **dadurch gekennzeichnet, dass** der Zwischensteg (12) aus Glimmer besteht.
